# EUROPEAN PATENT SPECIFICATION

(11) **EP 4 261 463 B1**
(45) Date of publication and mention of the grant of the patent: **08.07.2026**
(21) Application number: 23195765.5
(22) Date of filing: 21.12.2018
(51) Int. Cl.: A47J 36/32, F24C 7/08, F24C 15/32, A47J 27/04

(54) **COOKING APPLIANCE**
KOCHGERÄT
APPAREIL DE CUISSON

(30) Priority: 04.04.2018 KR 20180039202
(43) Date of publication of application: 18.10.2023
(62) Divisional of application: 18215006.0
(73) Proprietor: LG Electronics Inc., Yeongdeungpo-gu Seoul 07336 (KR)
(72) Inventor: JUNG, Yoojin, Seoul 08592 (KR); SIM, Hoonseob, Seoul 08592 (KR); YANG, Jaekyung, Seoul 08592 (KR); LEE, Yongsoo, Seoul 08592 (KR); LIM, Hakjoo, Seoul 08592 (KR)
(74) Representative: Ter Meer Steinmeister & Partner

(56) References cited:
- EP-A1- 1 617 148
- EP-A1- 3 248 520
- EP-A1- 4 063 739
- WO-A1-2016/034240
- DE-B3- 102016 121 306
- US-A1- 2010 064 902
- US-B2- 8 207 477

## Description

### BACKGROUND

The present specification relates to a cooking appliance and a method for controlling the same.

The cooking appliance refers to an appliance for cooking food using heat of a heating source. The cooking appliance includes a heating source for heating food contained in a cooking chamber.

In general, the cooking appliance may include at least one or plurality of heating sources. If the cooking appliance includes a steam generator, steam generated in the steam generator is supplied to a cooking chamber, thereby cooking food.

Korean Patent Registration Publication No. 10-0624080 discloses a heating cooker including a main body having a cooking chamber formed therein, a steam generation heater installed in the cooking chamber, a water receiver installed in the cooking chamber such that a portion of the steam generation heater is submerged, and a water supply device for supplying water to the water receiver.

According to the prior art document, after steam generation operation, the water in the water receiver is evaporated by residual heat of the steam generation heater, such that residual water does not remain in the water receiver.

However, steam supplied into the cooking chamber is condensed in the cooking chamber to drop to the bottom of the cooking chamber. The water (residual water) dropping to the bottom of the cooking chamber is not evaporated by the residual heat of the steam generation heater.

Thus, a user should remove residual water on the bottom of the cooking chamber using a rag.

DE 10 2016 121306 B3 relates to a steamer, with a treatment room for receiving goods to be treated and having a floor designed to receive condensed water from a treatment process, wherein the floor of the treatment room has at least one flat heating element, e.g. a foil heater, on its side facing away from the treatment room, which is designed to at least cover the floor of the treatment room to heat in sections by means of at least one electrical heating element and to evaporate the condensed water received there into the treatment room.

WO 2016/034240 A1 relates to an oven comprising an oven cavity with a closable opening for receiving food to be cooked or baked, an evaporation cavity in a bottom wall of the oven cavity and an evaporation heating element being arranged for heating the evaporation cavity. The evaporation cavity is formed as an embossment in the bottom wall of the oven cavity and the heating power of the evaporation heating element is adapted to evaporate a volume of water to be evaporated that corresponds to the volume of such an embossment.

### SUMMARY

The present invention provides a cooking appliance capable of changing water dropping to the bottom of a cooking chamber into steam used for cooking in a steam cooking process, and a method for controlling the same.

The present invention provides a cooking appliance capable of increasing the amount of steam used to cook food to enable rapid cooking, and a method for controlling the same.

The present invention provides a cooking appliance, in which residual water does not remain on the bottom of a cooking chamber after steam cooking is finished, and a method for controlling the same.

The object is solved by the features of the independent claims. Preferred embodiments are given in the dependent claims.

According to the invention, a cooking appliance includes a main body including a cooking chamber, a steam generator including a steam heater for generating steam for heating food contained in the cooking chamber, a lower heater located below a bottom wall of the cooking chamber and configured to generate heat to heat the food, and a controller configured to control the steam heater and the lower heater. The controller operates the steam heater to generate steam when a steam cooking mode is selected, and turns the lower heater on while steam cooking is performed.

A recessed water collection part for collecting water is provided in the bottom wall of the cooking chamber, such that condensed water dropping the bottom wall of the cooking chamber is efficiently changed into steam.

In one embodiment, the lower heater may be turned on when a predetermined time has passed after the steam cooking starts.

The cooking appliance comprises a steam supply port provided in one sidewall of the cooking chamber.

The cooking appliance comprises a water tank configured to store water for generating steam to be supplied to the cooking chamber.

The cooking appliance comprises a water supply pump configured to supply water to the water tank

In some embodiments, the cooking appliance may comprise a drainage pump for discharging water of the water tank.

According to the invention, the cooking appliance includes a main body including a cooking chamber, a steam supply port provided in one sidewall of the cooking chamber, a water tank configured to store water used to generate steam to be supplied to the cooking chamber, a steam generator including a steam heater for heating water stored in the water tank, a water supply pump configured to supply water to the water tank, a lower heater located below a bottom wall of the cooking chamber and configured to generate heat to heat the food, and a controller configured to control the steam heater and the lower heater. The controller operates the water supply pump such that water supplied to the water tank is supplied to the cooking chamber through the steam support port before the steam heater operates, when a steam cooking mode is selected, and operates the steam heater and the lower heater after water is supplied to the cooking chamber.

A water collection part for collecting water used to generate steam is provided in the bottom wall of the cooking chamber.

Preferably, the steam generator including the water tank and the steam heater are disposed outside the cooking chamber.

The steam generator, preferably the water tank, is connected by a channel to the steam support port being preferably provided at a wall of the cooking chamber.

The lower heater may be turned off after operating for a predetermined time.

The lower heater may be turned on again once or more until the steam cooking is finished, after the lower heater is turned off, such that residual water does not remain in the water collection part.

According to another aspect not part of the invention, a method for controlling a cooking appliance includes starting steam cooking and operating a steam heater for generating steam to be supplied to a cooking chamber, determining whether a predetermined time has passed after the steam cooking starts, and turning a lower heater provided below a bottom wall of the cooking chamber on upon determining that the predetermined time has passed.

According to another aspect of the invention, a method for controlling a cooking appliance including a water tank configured to store water used to generate steam to be supplied to a cooking chamber, a steam generator including a steam heater for heating water stored in the water tank, a water supply pump configured to supply water to the water tank, a lower heater located below a bottom wall of the cooking chamber, and a steam supply port provided in one sidewall of the cooking chamber to supply the steam generated in the water tank includes starting steam cooking and operating the water supply pump such that water passing through the water thank is supplied to the cooking chamber through the steam supply port, operating a drainage pump to discharge some of the water of the water tank after operating the water supply pump, and simultaneously or sequentially operating the steam heater and the lower heater after stopping the drainage pump.

### BRIEF DESCRIPTION OF THE DRAWINGS

FIG. 1 is a view schematically showing a cooking appliance according to an embodiment of the present invention.
FIG. 2 is a block diagram showing a cooking appliance according to an embodiment of the present invention.
FIG. 3 is a flowchart illustrating a method of controlling a cooking appliance according to an embodiment of the present disclosure which is not part of the invention.
FIG. 4 is a flowchart illustrating a method of controlling a cooking appliance according to an embodiment of the present invention.

### DETAILED DESCRIPTION OF THE EMBODIMENTS

Hereinafter, some embodiments of the present disclosure will be described in detail with reference to the accompanying drawings. It should be noted that when components in the drawings are designated by reference numerals, the same components have the same reference numerals as far as possible even though the components are illustrated in different drawings. Further, in description of embodiments of the present disclosure, when it is determined that detailed descriptions of well-known configurations or functions disturb understanding of the embodiments of the present disclosure, the detailed descriptions will be omitted

Also, in the description of the embodiments of the present disclosure, the terms such as first, second, A, B, (a) and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

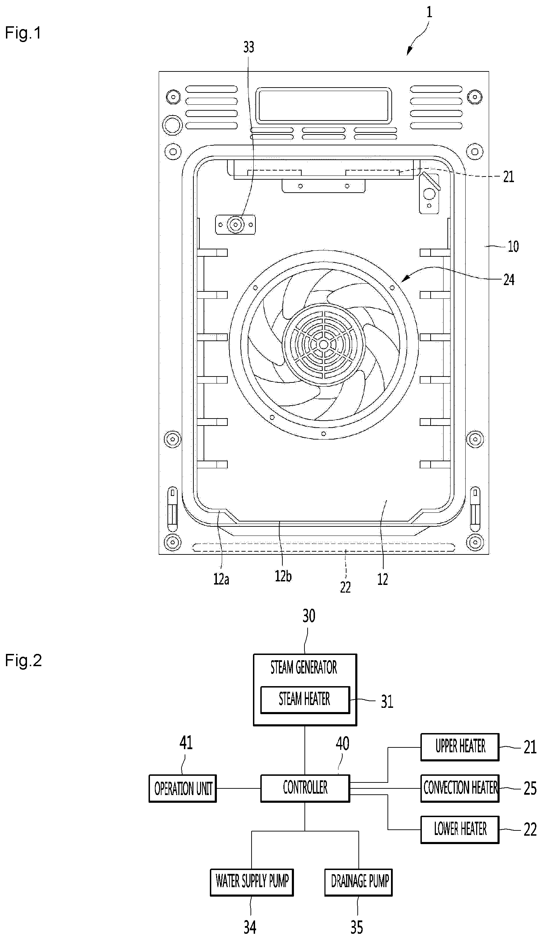

FIG. 1 is a view schematically showing a cooking appliance according to an embodiment of the present invention, and FIG. 2 is a block diagram showing a cooking appliance according to an embodiment of the present invention.

Referring to FIGS. 1 and 2, the cooking appliance 1 according to the embodiment of the present invention includes a main body 10. The main body 10 includes a cooking chamber 12. Although not shown, the cooking appliance 1 may further include a door connected to the main body 10 to open or close the cooking chamber 12.

The cooking appliance 1 includes a plurality of heating sources in order to cook the food contained in the cooking chamber 12. The heating source includes a steam generator, and may include an electric heater, a magnetron, etc. or a combination thereof.

Different types of heating sources can be installed.

Although not limited, the plurality of heating sources may include, for example, an upper heater 21 and includes a lower heater 22.

The upper heater 21 may be located at the upper side in the cooking chamber 12 and may supply heat to the upper space of the cooking chamber 12. Of course, the upper heater 21 may be located at the upper side of the cooking chamber 12, preferably outside the cooking chamber 12. In this case, an opening, through which heat passes, may be formed in the upper wall of the cooking chamber 12. Alternatively, when the upper heater generates radiant energy, a transmission part may be provided in the upper wall of the cooking chamber 12.

The lower heater 22 is located below the bottom wall 12a of the cooking chamber 12 outside the cooking chamber 12. The lower heater 22 is configured to supply heat to the lower side of the food contained in the cooking chamber 12.

A water collection part 12b, in which water may be collected, is provided in the bottom wall 12a of the cooking chamber 12. The water collection part 12b may be, for example, formed in the bottom wall 12a in a downwardly recessed shape.

Water collected in the water collection part 12b may be heated by the lower heater 22, thereby being evaporated.

The upper heater 21 and the lower heater 22 may be, for example, electric heater.

The plurality of heating sources may further include a convection heater 25 configuring a convection device 24. The convection device 24 may include a convection fan. By the convection fan, air in the cooking chamber 21 may flow to the convection heater, thereby being heated and then supplied to the cooking chamber 12.

The plurality of heating sources further includes a steam generator 30 for heating water to generate steam.

The steam generator 30 includes a water tank for storing water and a steam heater 31 for heating the water of the water tank.

When water is heated by the steam heater 31, the water may be changed into steam and the steam may be supplied into the cooking chamber 12 through a steam supply port 33 formed in one sidewall of the cooking chamber 12.

The cooking appliance 1 further includes a water supply pump 34 for supplying water to the water tank

The cooking appliance 1 may further include a drainage pump 35 for discharging the water from the water tank of the steam generator.

The water supply pump 34 is configured to supply water to the water tank for the steam cooking process. Preferably, during the steam cooking process, the water supply pump 34 may be intermittently operated to intermittently supply water to the water tank.

The drainage pump 35 may operate to discharge residual water remaining in the water tank after the steam cooking process.

The cooking appliance 1 may further include an operation unit 41 for selecting a cooking mode or a type of each of the plurality of heating sources and a controller 40 for controlling the plurality of heating sources by a command received from the operation unit 41.

As described above, since different types of heating sources may be provided, the cooking appliance 1 according to the present embodiment may cook various types of food using various cooking modes.

In the present invention, the cooking mode includes at least a steam cooking mode for cooking food using at least steam.

In the steam cooking mode, at least the steam heater 31 of the plurality of heating sources may operate.

Hereinafter, methods for controlling a cooking appliance are disclosed.

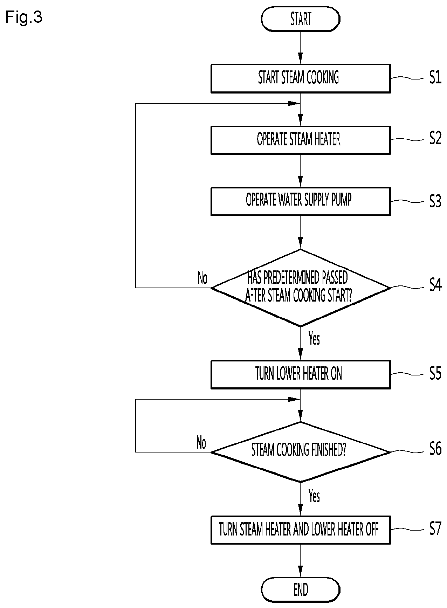

FIG. 3 is a flowchart illustrating a method of controlling a cooking appliance according to an embodiment of the present disclosure which is not part of the invention, described hereafter.

Referring to FIGS. 2 and 3, when the steam cooking mode is selected, steam cooking may start (S1).

For steam cooking, the controller 40 operates the steam heater 31 (S2). Although water is not contained in the water tank, the steam heater 31 may first operate, for preheating the water tank

In addition, the controller 40 may operate the water supply pump 34 for supplying water to the water tank (S3).

At this time, the controller 40 may operate the drainage pump 35 for a predetermined time before operating the water supply pump 34, in order to remove water which may remain in the water tank.

When the water remains in the water tank for a long time scale may be mixed with the fresh water supplied to the water tank. The drainage pump 35 may first operate in order to discharge the scale in the water tank together with residual water.

If water is heated in a state in which the scale remains, the scale may be supplied to the cooking chamber together with steam. In this case, the scale may be attached to food. However, this may be prevented by operating the drainage pump 35 before operating the water supply pump 34.

Of course, the drainage pump 35 may first operate and then the steam heater 31 may operate.

When the steam cooking mode starts, the water supply pump 34 and the steam heater 31 may simultaneously operate.

Alternatively, the water supply pump 34 may first operate to start water supply and then the steam heater 31 may operate.

The amount of water supplied to the water tank by operation of the water supply pump 34 at the beginning of the steam cooking may be referred to as a first supply amount.

In general, the first supply amount may be set to a capacity/volume less than a maximum capacity/volume of the water tank. So the water tank is not fully filled up.,

When the steam heater 31 operates in a state of supplying water to the water tank, the water of the water tank may be heated and transferred by heat of the steam heater 31 into steam. The steam generated in the water tank may be supplied into the cooking chamber 12 through the steam supply port 33.

The steam heater 31 may be repeatedly turned on and off in the entire steam cooking process. That is, the steam heater 31 may be intermittently operated by the controller 40.

In addition, the water supply pump 34 may also be repeatedly turned on and off in the entire steam cooking process. That is, the water supply pump 34 may be intermittently operated by the controller 40.

The steam is supplied into the cooking chamber 12 for heating food inside the cooking chamber 12. Some of the steam supplied to the cooking chamber 12 may come in contact with the food. Then the steam is condensed and the condensed water is flowing along the food downwardly.

The other of the steam supplied into the cooking chamber 12 may not contact the food and may be condensed in the cooking chamber 12, thereby condensed water drops to the bottom wall 12a of the cooking chamber 12.

As described above, since the recessed water collection part 12b is provided mainly in the bottom wall 12a of the cooking chamber 12, the condensed water is collected in the water collection part 12b.

At this time, as the steam cooking time is increased, the amount of condensed water collected in the water collection part 12b may be increased.

In the present embodiment, in order to use the condensed water collected in the water collection part 12b for cooking, the controller 40 may determine whether a predetermined time has passed after the steam cooking starts (S4).

Upon determining that the predetermined time has passed after the steam cooking starts in step S4, the controller 40 turns the lower heater 22 on (S5).

When the lower heater 22 is turned on, the water collected in the water collection part 12b is heated by heat generated by the lower heater 22, thereby generating steam.

Such steam may be used to heat the food.

That is, the food may be cooked by the steam generated in the steam generator 30 in the steam cooking process and the steam generated by heating the water collected in the water collection part 12b.

According to the present embodiment, it is possible to increase the amount of steam used to heat the food without increasing the capacity of the water tank of the steam generator 30 or the output of the steam heater 31.

In addition, if the amount of steam used to heat the food is increased, it is possible to reduce the cooking time of the food.

The controller 40 determines whether steam cooking is finished (S6), and turns off the steam heater 31 and the upper heater 22 when steam cooking is finished (S7).

When the water stored in the water collection part 12b is heated by the lower heater 22, residual water does not remain in the water collection part 12b after the steam cooking is finished.

Accordingly, according to the present embodiment, it is possible to prevent the heater from unnecessarily operating in order to remove the residual water of the water collection part 12b after the steam cooking is finished.

In addition, since it is not necessary for the user to clean the water collection part 12b in order to remove the residual water of the water collection part 12b after the steam cooking is finished, user's troublesomeness may be removed and user convenience is increased.

In the present embodiment, since the amount of water collected in the water collection part 12b at the beginning of the steam cooking is small, the amount of steam generated by operating the lower heater 22 is small and thus the food may be excessively heated by heat of the lower heater 22.

Accordingly, in the present embodiment, the lower heater 22 is turned on only when the predetermined time has passed after the steam cooking starts. So, an excessive heating of the food by the lower heater is avoided.

Although the lower heater 22 is turned off after the steam cooking is finished in the above embodiment, the lower heater 22 may be turned off before the steam cooking is finished.

At this time, when a difference between a time when the lower heater 22 is turned off and a time when the steam cooking is finished is small, even when some of the water remains in the water collection part 12b in a state of turning the lower heater 22 off before the steam cooking is finished, the residual water remaining in the water collection part 12b may be heated by residual heat of the lower heater 22, thereby being evaporated.

As another example, the lower heater 22 may intermittently operate until the steam cooking is finished. That is, the lower heater 22 may be repeatedly turned on/off.

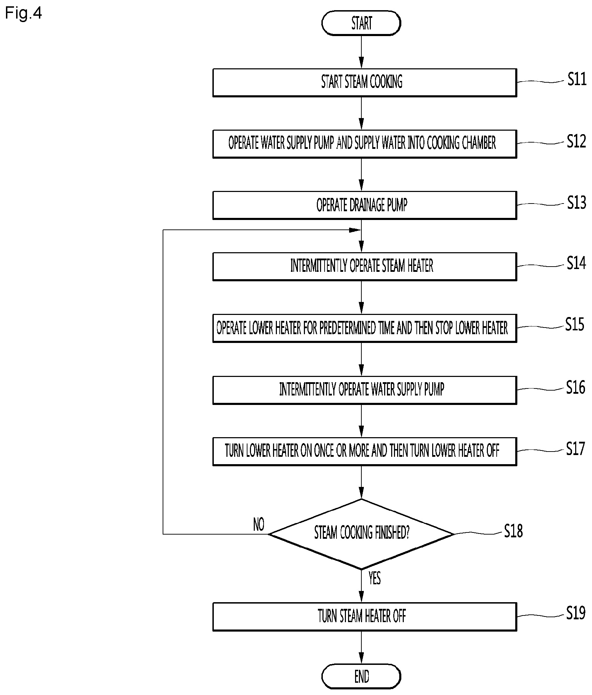

FIG. 4 is a flowchart illustrating a method of controlling a cooking appliance according to an embodiment of the present invention.

The present embodiment is equal to the previous embodiment in the configuration of the cooking appliance and is different therefrom in a method for generating additional steam by the lower heater. Accordingly, only the characteristics of the present embodiment will be described.

Referring to FIG. 4, when the steam cooking mode is selected, steam cooking may start (S11).

The controller 40 may operate the water supply pump 34 such that water is supplied to the water collection part 12b before the steam heater 31 operates (S12).

The amount of water supplied to the water tank by the water supply pump 34 may be referred to as a second supply amount.

In the present embodiment, the second supply amount of water may be greater than the first supply amount of water of the first embodiment. But essentially the second supply amount of water may be greater than the maximum capacity/volume of the water tank, such that the water overflows the water tank and passing through the water tank is supplied into the cooking chamber to be collected in the water collection part 12b.

In particular, the second supply amount may be set to a capacity/volume higher than the maximum capacity/volume of the water tank and preferably also the maximum capacity/volume of a steam channel for connecting the water tank and the steam supply port 33.

Accordingly, the water supplied to the water tank may overflow from the water tank, thereby being supplied to the cooking chamber 12 through the steam supply port 33.

In the present embodiment, since the water supplied to the water tank is supplied to the cooking chamber 12, even when scale is present in the water tank, the scale may be discharged from the water tank and moved to the bottom wall 12a of the cooking chamber 12 together with water.

At this time, since the scale is accumulated in the water collection part 12b of the cooking chamber 12, it is possible to prevent the scale from being moved to the food while the water of the water collection part 12b is heated.

When the scale is present in the water collection part 12b, the user can easily remove the scale present in the water collection part 12b after the cooking is finished.

After the water supply pump 34 operates such that the second supply amount is supplied, the controller 40 stops the water supply pump 34 and may operate the drainage pump 35 (S13).

In the present embodiment, when operation of the water supply pump 34 is stopped, the water tank is filled with water and water remains in the channel for connecting the water tank and the steam support port 33.

When the steam heater 31 operates in this state, a time required to generate steam is increased and water flows to the bottom wall 12a of the cooking chamber 12 while water is heated.

Accordingly, after operation of the water supply pump 34 is stopped, the drainage pump 35 may operate in order to discharge some of the water of the water tank.

Next, the controller 40 controls operation of the steam heater 31 such that the steam heater 31 intermittently operates (S14).

In addition, the controller 40 operates the lower heater 22 for a predetermined time such that the water of the water collection part 12 is heated to generate steam, and then turns the lower heater 22 off (S15).

At this time, the steam heater 31 and the lower heater 22 may simultaneously or sequentially start to operate.

In addition, the controller 40 controls the water supply pump 34 such that the water supply pump 34 intermittently operates (S16).

The lower heater 22 and the steam heater 31 may simultaneously operate in a period of the steam cooking process and only the steam heater 31 may operate in the other period.

As described above, in the steam cooking process, some of the steam generated by the steam generator 30 and supplied to the cooking chamber 12 may be condensed and collected in the water collection part 12b.

However, in the steam cooking process, the amount of water collected in the water collection part 12b is less than the amount of water supplied to the water collection part 12b at the beginning of the steam cooking.

Accordingly, the lower heater 22 operates to heat the water of the water collection part 12, thereby generating steam. Then, the lower heater 22 is stopped after the predetermined time has passed, such that the operation time of the lower heater 22 is prevented from being increased in a state in which water does not remain in the water collection part 12b.

Even after the lower heater 22 is stopped, the condensed water may be collected in the water collection part 12b.

Accordingly, the controller 40 may control the lower heater 22 such that the lower heater 22 is turned on and off once or more until the steam cooking is finished after the lower heater 22 operates and stops once.

The controller 40 determines whether the steam cooking is finished (S18), and turns the steam heater 31 off when the steam cooking is finished (S19).

As another example, after the lower heater 22 operates and stops once, the lower heater 22 is turned on again and is turned off before the steam cooking is finished or is turned off together with the steam heater when the steam cooking is finished.

According to the present embodiment, since the lower heater 22 operates in a state of supplying water to the water collection part 12b, the amount of steams used to heat the food in the steam cooking process can be further increased and thus the cooking time of the food can be reduced.

## Claims

1. A cooking appliance comprising:
a main body (10) including a cooking chamber (12);
a steam generator (30) including a steam heater (31) for generating steam for heating food contained in the cooking chamber (12);
a lower heater (22) located below a bottom wall (12a) of the cooking chamber (12) and configured to generate heat to heat the food;
a controller (40) configured to control the steam heater (31) and the lower heater (22);
a recessed water collection part (12b) for collecting water in the bottom wall (12a) of the cooking chamber (12),
a steam supply port (33) provided in one sidewall of the cooking chamber (12);
a water tank configured to store water for generating steam to be supplied to the cooking chamber (12);
wherein the controller (40) is configured to operate the steam heater (31) to generate steam when a steam cooking mode is selected, and to turn on the lower heater (22) while steam cooking is performed such that water collected in the water collection part (12b) is heated by the lower heater (22), thereby being evaporated,
wherein the controller (40) is configured to operate the steam heater (31) and the lower heater (22) after water is supplied to the cooking chamber (12), **characterized in that**: the cooking appliance further comprises
a water supply pump (34) configured to supply the water to the water tank, and **in that**
the controller (40) is configured to: when a steam cooking mode is selected, operate the water supply pump (34) such that water supplied to the water tank is supplied to the cooking chamber (12) through the steam supply port (33) before the steam heater (31) operates.

2. The cooking appliance of claim 1, wherein the controller (40) is configured to turn on the lower heater (22) when a predetermined time has passed after the steam cooking starts.

3. The cooking appliance of claim 1 or 2, wherein the controller (40) is configured to simultaneously turn off the steam heater (31) and the lower heater (22), upon determining that the steam cooking is finished.

4. The cooking appliance of claim 1 or 2, wherein the controller (40) is configured to repeatedly turn on/off the lower heater (22) until the steam cooking is finished.

5. The cooking appliance of claim 1, 2 or 4, wherein the controller (40) is configured to turn the lower heater (22) off before the steam cooking is finished and to turn the steam heater (31) off upon determining that the steam cooking is finished.

6. The cooking appliance according to any one of the preceding claims, further comprising: a drainage pump (35) for discharging water of the water tank.

7. The cooking appliance of claim 6, wherein the controller (400) is configured to operate the drainage pump (35) in order to discharge some of the water of the water tank after the water supply pump (34) operates and before the steam heater (31) operates.

8. The cooking appliance of any one of the preceding claims, wherein the controller (40) is configured to turn off the lower heater (22) after the lower heater (22) operates for a predetermined time.

9. The cooking appliance according to claim 8, wherein the controller (40) is configured to turn on the lower heater (22) once or more until steam cooking is finished, after the lower heater (22) is turned off.

10. A method for controlling a cooking appliance according to any one of the preceding claims, the method comprising:
starting (S11) steam cooking when the steam cooking mode is selected;
supplying (S12) water to the water collection part (12b); and
operating, by the controller, the steam heater (31) and the lower heater (22) after water is supplied to the cooking chamber (12).

11. The method of claim 10, wherein the supplying water to the water collection part (12b) includes:
operating, by the controller, the water supply pump (34), wherein a supply amount of water is greater than a maximum volume of the water tank, such that the water overflows the water tank and passes through the water tank and is supplied into the cooking chamber to be collected in the water collection part (12b).

## Patentansprüche

1. Garvorrichtung, die Folgendes umfasst:
einen Hauptkörper (10), der einen Garraum (12) enthält;
einen Dampfgenerator (30), der eine Dampfheizeinrichtung (31) zum Erzeugen von Dampf zum Erhitzen von Lebensmitteln, die im Garraum (12) enthalten sind, enthält;
eine untere Heizeinrichtung (22), die unter einer unteren Wand (12a) des Garraums (12) angeordnet ist und konfiguriert ist, Wärme zu erzeugen, um die Lebensmittel zu erhitzen;
eine Steuereinheit (40), die konfiguriert ist, die Dampfheizeinrichtung (31) und die untere Heizeinrichtung (22) zu steuern;
eine vertiefte Wassersammelkomponente (12b) zum Sammeln von Wasser in der unteren Wand (12a) des Garraums;
eine Dampfzuführöffnung (33), die in einer Seitenwand des Garraums (12) vorgesehen ist;
einen Wasserbehälter, der konfiguriert ist, Wasser zum Erzeugen von Dampf, der dem Garraum (12) zugeführt werden soll, zu speichern;
wobei die Steuereinheit (40) konfiguriert ist, die Dampfheizeinrichtung (31) zu betreiben, Dampf zu erzeugen, wenn eine Dampfgar-Betriebsart ausgewählt ist, und die untere Heizeinrichtung (22) einzuschalten, während das Dampfgaren durchgeführt wird, derart, dass Wasser, das in der Wassersammelkomponente (12b) gesammelt ist, durch die untere Heizeinrichtung (22) erhitzt wird, wodurch es verdampft wird,
wobei die Steuereinheit (40) konfiguriert ist, die Dampfheizeinrichtung (31) und die untere Heizeinrichtung (22) zu betreiben, nachdem dem Garraum (12) Wasser zugeführt worden ist,
**dadurch gekennzeichnet, dass** die Garvorrichtung ferner eine Wasserzuführpumpe (34) umfasst, die konfiguriert ist, dem Wasserbehälter Wasser zuzuführen, und dass die Steuereinheit (40) konfiguriert ist zum: dann, wenn eine Dampfgar-Betriebsart ausgewählt ist, Betreiben der Wasserzuführpumpe (34), derart, dass Wasser, das dem Wasserbehälter zugeführt wird, dem Garraum (12) durch die Dampfzuführöffnung (33) zugeführt wird, bevor die Dampfheizeinrichtung (31) arbeitet.

2. Garvorrichtung nach Anspruch 1, wobei die Steuereinheit (40) konfiguriert ist, die untere Heizeinrichtung (22) einzuschalten, wenn eine vorgegebene Zeit verstrichen ist, nachdem das Dampfgaren begonnen hat.

3. Garvorrichtung nach Anspruch 1 oder 2, wobei die Steuereinheit (40) konfiguriert ist, aufgrund des Bestimmens, dass das Dampfgaren beendet ist, gleichzeitig die Dampfheizeinrichtung (31) und die untere Heizeinrichtung (22) auszuschalten.

4. Garvorrichtung nach Anspruch 1 oder 2, wobei die Steuereinheit (40) konfiguriert ist, die untere Heizeinrichtung (22) wiederholt ein-/auszuschalten, bis das Dampfgaren beendet ist.

5. Garvorrichtung nach Anspruch 1, 2 oder 4, wobei die Steuereinheit (40) konfiguriert ist, die untere Heizeinrichtung (22) auszuschalten, bevor das Dampfgaren beendet ist, und die Dampfheizeinrichtung (31) aufgrund des Bestimmens, dass das Dampfgaren beendet ist, auszuschalten.

6. Garvorrichtung nach einem der vorhergehenden Ansprüche, die ferner Folgendes umfasst: eine Ablaufpumpe (35) zum Auslassen von Wasser aus dem Wasserbehälter.

7. Garvorrichtung nach Anspruch 6, wobei die Steuereinheit (400) konfiguriert ist, die Ablaufpumpe (35) zu betreiben, um etwas von dem Wasser des Wasserbehälters auszulassen, nachdem die Wasserzuführpumpe (34) gearbeitet hat und bevor die Dampfheizeinrichtung (31) arbeitet.

8. Garvorrichtung nach einem der vorhergehenden Ansprüche, wobei die Steuereinheit (400) konfiguriert ist, die untere Heizeinrichtung (22) auszuschalten, nachdem die untere Heizeinrichtung (22) für eine vorgegebene Zeit gearbeitet hat.

9. Garvorrichtung nach Anspruch 8, wobei die Steuereinheit (40) konfiguriert ist, die untere Heizeinrichtung (22) einmal oder häufiger einzuschalten, bis das Dampfgaren beendet ist, nachdem die untere Heizeinrichtung (22) ausgeschaltet worden ist.

10. Verfahren zum Steuern einer Garvorrichtung nach einem der vorhergehenden Ansprüche, wobei das Verfahren Folgendes umfasst:
Starten (S11) des Dampfgarens, wenn die Dampfgar-Betriebsart ausgewählt ist;
Zuführen (S12) von Wasser zur Wassersammelkomponente (12b); und
Betreiben der Dampfheizeinrichtung (31) und der unteren Heizeinrichtung (22), nachdem dem Garraum (12) Wasser zugeführt worden ist, durch die Steuereinheit.

11. Verfahren nach Anspruch 10, wobei das Zuführen von Wasser zur Wassersammelkomponente (12b) Folgendes umfasst:
Betreiben der Wasserzuführpumpe (34) durch die Steuereinheit, wobei eine Zuführmenge des Wasser größer als ein maximales Volumen des Wasserbehälters ist, derart, dass das Wasser den Wasserbehälter überströmt und durch den Wasserbehälter strömt und dem Garraum zugeführt wird, derart, dass es in der Wassersammelkomponente (12b) gesammelt wird.

## Revendications

1. Appareil de cuisson comportant :
un corps principal (10) incluant une chambre de cuisson (12) ;
un générateur de vapeur (30) incluant un dispositif de chauffage à la vapeur (31) pour générer de la vapeur destinée à chauffer des aliments contenus dans la chambre de cuisson (12) ;
un élément chauffant inférieur (22) situé sous une paroi inférieure (12a) de la chambre de cuisson (12) et configuré pour générer de la chaleur afin de chauffer les aliments ;
une commande (40) configurée pour commander le dispositif de chauffage à la vapeur (31) et l'élément chauffant inférieur (22) ;
une partie de collecte d'eau (12b) en creux pour collecter l'eau dans la paroi inférieure (12a) de la chambre de cuisson (12),
un orifice d'alimentation en vapeur (33) ménagé dans une paroi latérale de la chambre de cuisson (12) ;
un réservoir d'eau configuré pour stocker de l'eau destinée à générer de la vapeur à fournir à la chambre de cuisson (12) ;
dans lequel la commande (40) est configurée pour faire fonctionner le dispositif de chauffage à la vapeur (31) afin de générer de la vapeur lorsqu'un mode de cuisson à la vapeur est sélectionné, et pour mettre en marche l'élément chauffant inférieur (22) pendant que la cuisson à la vapeur est effectuée de telle sorte que l'eau collectée dans la partie de collecte d'eau (12b) est chauffée par l'élément chauffant inférieur (22), en étant ainsi évaporée,
dans lequel la commande (40) est configurée pour faire fonctionner le dispositif de chauffage à la vapeur (31) et l'élément chauffant inférieur (22) après la fourniture d'eau à la chambre de cuisson (12), **caractérisé en ce que** l'appareil de cuisson comporte en outre :
une pompe d'alimentation en eau (34) configurée pour fournir de l'eau au réservoir d'eau, et **en ce que**
la commande (40) est configurée pour : lorsqu'un mode de cuisson à la vapeur est sélectionné, faire fonctionner la pompe d'alimentation en eau (34) de telle sorte que l'eau fournie au réservoir d'eau est fournie à la chambre de cuisson (12) par l'orifice d'alimentation en vapeur (33) avant que le dispositif de chauffage à la vapeur (31) ne fonctionne.

2. Appareil de cuisson selon la revendication 1, dans lequel la commande (40) est configurée pour mettre en marche l'élément chauffant inférieur (22) lorsqu'un temps prédéterminé s'est écoulé après le début de la cuisson à la vapeur.

3. Appareil de cuisson selon la revendication 1 ou 2, dans lequel la commande (40) est configurée pour arrêter simultanément le dispositif de chauffage à la vapeur (31) et l'élément chauffant inférieur (22), lorsqu'il est déterminé que la cuisson à la vapeur est terminée.

4. Appareil de cuisson selon la revendication 1 ou 2, dans lequel la commande (40) est configurée pour mettre en marche/arrêter de manière répétée l'élément chauffant inférieur (22) jusqu'à ce que la cuisson à la vapeur soit terminée.

5. Appareil de cuisson selon la revendication 1, 2 ou 4, dans lequel la commande (40) est configurée pour arrêter l'élément chauffant inférieur (22) avant la fin de la cuisson à la vapeur et pour arrêter le dispositif de chauffage à la vapeur (31) lorsqu'il est déterminé que la cuisson à la vapeur est terminée.

6. Appareil de cuisson selon l'une quelconque des revendications précédentes, comportant en outre une pompe de vidange (35) pour évacuer l'eau du réservoir d'eau.

7. Appareil de cuisson selon la revendication 6, dans lequel la commande (400) est configurée pour faire fonctionner la pompe de vidange (35) afin d'évacuer une partie de l'eau du réservoir d'eau après le fonctionnement de la pompe d'alimentation en eau (34) et avant le fonctionnement du dispositif de chauffage à la vapeur (31).

8. Appareil de cuisson selon l'une quelconque des revendications précédentes, dans lequel la commande (40) est configurée pour arrêter l'élément chauffant inférieur (22) après le fonctionnement de l'élément chauffant inférieur (22) pendant un temps prédéterminé.

9. Appareil de cuisson selon la revendication 8, dans lequel la commande (40) est configurée pour mettre en marche l'élément chauffant inférieur (22) une fois ou plus jusqu'à la fin de la cuisson à la vapeur, après l'arrêt de l'élément chauffant inférieur (22).

10. Procédé de commande d'un appareil de cuisson selon l'une quelconque des revendications précédentes, le procédé comportant de :
démarrer (S11) une cuisson à la vapeur lorsque le mode de cuisson à la vapeur est sélectionné ;
fournir (S12) de l'eau à la partie de collecte d'eau (12b) ; et
faire fonctionner, par la commande, le dispositif de chauffage à la vapeur (31) et l'élément chauffant inférieur (22) après la fourniture d'eau à la chambre de cuisson (12).

11. Procédé selon la revendication 10, dans lequel la fourniture d'eau à la partie de collecte d'eau (12b) inclut de :
faire fonctionner, par la commande, la pompe d'alimentation en eau (34), dans lequel la quantité d'apport d'eau est supérieure à un volume maximal du réservoir d'eau, de telle sorte que l'eau déborde du réservoir d'eau et passe à travers le réservoir d'eau et est fournie dans la chambre de cuisson pour être collectée dans la partie de collecte d'eau (12b).
